# EUROPEAN PATENT APPLICATION

(11) **EP 4 379 436 A1**
(43) Date of publication of application: **05.06.2024**
(21) Application number: 23212631.8
(22) Date of filing: 28.11.2023
(51) Int. Cl.: G02B 6/122, G02B 6/30, G02B 6/12, G02B 6/14

(54) **APPARATUS FOR OPTICAL COUPLER**

(30) Priority: 01.12.2022 US 202263429382 P
(71) Applicant: Xanadu Quantum Technologies Inc., Toronto, Ontario M5G 2C8 (CA)
(72) Inventor: KRASNOKUTSKA, Inna, Toronto ON M5V 0J8 (CA); MORRISON, Blair, Toronto ON M6E 2S2 (CA)
(74) Representative: Hernandez Lehmann, Aurelio

(57) **Abstract**

There is described an optical coupler having a plurality of waveguides arranged in a plurality of cladding layers, each cladding layer having at least one waveguide. One or more of the vertical distances between waveguides in adjacent cladding layers and transverse distances between waveguides in the same cladding layer may be configured to perform one or more of mode matching with an external light source, maintaining optical coupling between the plurality of waveguides, and ensuring optical efficiency of the optical coupler.

## Description

### CROSS-REFERENCE TO RELATED APPLICATIONS

This application claims the benefit of, and priority to, U.S. Provisional Patent Application No. 63/429,382, filed December 1, 2022 and titled "Methods and Apparatus for Optical Coupler," the entire content of which is incorporated herein by reference for all purposes.

### BACKGROUND OF THE INVENTION

The present application relates to optical couplers, and in particular to edge couplers for optical signal communication.

One of the challenges in optical signal communication is the efficient edge coupling of optical fibres and integrated optical waveguides. The difficulty arises from the mismatch of the modal sizes between the different optical mediums. Typically, the fibre mode can be up to ten times larger than that of the integrated waveguide and this difference can result in significant optical coupling loss.

One coupler design involves waveguide segments laterally confined within multiple active optical device layers. However, such designs typically require high degrees of fabrication accuracy. Even small variations (e.g., ranging from 10 nm to 50 nm) in the cross-sectional dimensions of waveguides and/or surrounding cladding dielectric could lead to considerable optical loss.

Thus, there is a need in the art for an improved optical coupler for coupling an optical fibre to a waveguide that at least partially overcomes some of the above identified problems of the related art.

### SUMMARY OF THE INVENTION

The present disclosure provides a method and system for an optical coupling device configured to couple an external light source, such as a laser source or a fibre optical cable, to an integrated waveguide on an integrated silicon photonics chip for both classical and quantum photonic applications with relatively high levels of optical efficiency.

In one aspect, the present disclosure provides an optical coupler that provides multiple parameters that may be configured to maintain mode-matching conditions to provide a greater degree of tolerance to dimensional variations in the coupler waveguide and/or surrounding dielectric cladding.

In a further aspect, one of the first optical device layer and the second optical device layer is also the functional optical device layer where the optical circuit elements, including one or more modulators, switches, and detectors, are located. Accordingly, the need for additional guiding or transitional layers for completing the mode transfer from the external light source onto the integrated silicon photonics chip may be obviated.

In a further still aspect, the present disclosure provides a method and system for an optical coupling device that has the flexibility to accommodate fabrication limitations. In some embodiments, the dimensions of the first optical waveguide and those of the second and third optical waveguides may be interchangeable to accommodate fabrication limitations with respect to layer thickness.

The distance between the two or more optical device layers and the distance between the second and third optical waveguides on the second optical device layer may be configured to accommodate fabrication limitations and tolerance errors. Further, the configuration of the two distance values may be configured to mode match external light sources. By way of a non-limiting example, the external light source may be an SMF-28 optical fibre cable which has a relatively large mode field diameter (MFD) of up to 10.4 µm at a wavelength of λ = 1550 nm.

According to an exemplary aspect, there is an optical coupler comprising: a semiconductor substrate; a first cladding layer supported over the substrate; a second cladding layer supported over the substrate, the substrate, the first cladding layer, and the second cladding layer defining a facet; a first optical waveguide arranged in the first cladding layer, the first optical waveguide having a first cross-sectional area at the facet defined by a first thickness in a vertical direction and a first width in a transverse direction orthogonal to the vertical direction; a second optical waveguide arranged in the first cladding layer, the second optical waveguide at a first transverse distance from the first optical waveguide, the second optical waveguide having a second cross-sectional area defined by a second thickness and a second width at the facet; and a third optical waveguide arranged in the second cladding layer, the third optical waveguide at a first vertical distance from the first and second optical waveguides, the third optical waveguide having a third cross-sectional area defined by a third thickness and a third width at the facet; and wherein the first transverse distance and the first vertical distance are configured to perform one or more of mode matching with an external light source, maintaining optical coupling between the first, second, and third optical waveguides, and ensuring optical efficiency of the optical coupler.

In any of the above aspects, the first thickness and the second thickness may be substantially identical, and the first width and the second width may be substantially identical.

In any of the above aspects, the third thickness may be greater than the third width, and the first thickness may be less than the first width.

In any of the above aspects, the third thickness may be less than the third width, and the first thickness may be greater than the first width.

In any of the above aspects, the first cross-sectional area and the second cross-sectional area may be configured to optimize mode matching at the facet.

In any of the above aspects, the first cross-sectional area may be defined by a first thickness of less than 300 nm, and the first width may be greater than the first thickness.

In any of the above aspects, the third cross-sectional area may be configured to optimize coupling efficiency.

In any of the above aspects, the third thickness may be greater than 300 nm, and the third width may be less than the third thickness.

In any of the above aspects, the third optical waveguide may have a terminal width that is substantially identical to a width of a routing waveguide of a photonic integrated circuit (PIC).

In any of the above aspects, the PIC may be fabricated onto the second cladding layer such that the third optical waveguide is in optical communication with the routing waveguide of the PIC.

In any of the above aspects, a difference between the first width and the second width, and between the first thickness and the second thickness may be up to 50 nm.

In any of the above aspects, the second cladding layer may be supported above the first cladding layer.

In any of the above aspects, the first cladding layer may be supported above the second cladding layer.

In any of the above aspects, the first thickness may be substantially identical to the second thickness and the third thickness; and the first width may be substantially identical to the second width and the third width.

Any of the above aspects may further comprise a fourth optical waveguide arranged in the second cladding layer at a second transverse distance from the third optical waveguide, the fourth optical waveguide having a fourth cross-sectional area defined by a fourth thickness and a fourth width at the facet; wherein the first transverse distance, the second transverse distance, and the first vertical distance are configured to perform one or more of mode matching with an external light source, maintaining optical coupling between optical energy transmitted within the first, second, third, and fourth optical waveguides, and ensuring optical efficiency of the optical coupler.

In any of the above aspects, the fourth thickness may be substantially identical to the third thickness, and the fourth width may be substantially identical to the third width.

Any of the above aspects may further comprise a third cladding layer supported over the substrate, the substrate, the first cladding layer, the second cladding layer, and the third cladding layer defining the facet; a fifth optical waveguide arranged in the third cladding layer, the fifth optical waveguide having a fifth cross-sectional area at the facet defined by a fifth thickness in a vertical direction and a fifth width in a transverse direction orthogonal to the vertical direction; and a sixth optical waveguide arranged in the third cladding layer, the sixth optical waveguide at a third transverse distance from the fifth optical waveguide, the sixth optical waveguide having a sixth cross-sectional area defined by a sixth thickness and a sixth width at the facet, the fifth and sixth optical waveguides being at a second vertical distance from the waveguides of an adjacent cladding layer; wherein the first transverse distance, the second transverse distance, the third transverse distance, the first vertical distance, and the second vertical distance are configured to perform one or more of mode matching with an external light source, maintaining optical coupling between optical energy transmitted within the first, second, third, fourth, fifth, and sixth optical waveguides, and ensuring optical efficiency of the optical coupler.

In any of the above aspects, the second cladding layer may be supported above the first cladding layer and the third cladding layer may be supported above the second cladding layer.

In any of the above aspects, the six waveguides in the three cladding layers may be arranged such that they form a hexagonal shape at the facet where a first sum of the first transverse distance and the first width is substantially identical to a second sum of the third transverse distance and the fifth width, the first sum and the second sum being each less than a third sum of the second transverse distance and the second width.

In any of the above aspects, the first and second optical waveguides may be configured to optimize optical coupling where the first and second thickness are greater than 300 nm, and the first and second widths are less than the first and second thicknesses; and the third, fourth, fifth, and sixth optical waveguides may be configured to optimize mode matching where the third, fourth, fifth, and sixth thicknesses are each less than the third, fourth, fifth, and sixth widths, respectively.

### BRIEF DESCRIPTION OF DRAWINGS

Reference will now be made, by way of example, to the accompanying figures which show example embodiments of the present application, and in which:
FIGS. 1A and 1B illustrate a top view and a side cross-sectional view of an exemplary photonic optical system in accordance with the present disclosure;
FIG. 2 illustrates a cross-sectional view of one exemplary embodiment of the optical coupler along the A-A line in FIG. 1B as seen at the chip facet;
FIG. 3 illustrates a top view of the arrangement of optical waveguides within the optical coupler shown in FIG. 2;
FIG. 4 illustrates a cross-sectional view of an optical coupler in accordance with another embodiment of the present disclosure along the A-A line in FIG. 1B as seen at the chip facet;
FIG. 5 illustrates a top view of the arrangement of optical waveguides within the optical coupler shown in FIG. 4;
FIG. 6 illustrates a cross-sectional view of an optical coupler in accordance with another embodiment of the present disclosure along the A-A line in FIG. 1B as seen at the chip facet where the guiding layers all have the same thickness;
FIG. 7 illustrates a top view of the arrangement of optical waveguides within the optical coupler shown in FIG. 6;
FIGS. 8A - 8D illustrate simulation plots of the coupling efficiency (CE) of the optical coupler in FIG. 2, mode matched with a fibre having an MFD of 6.4 µm, as a function of various design parameters generated using Ansys Lumerical MODE@.
FIG. 9 illustrates a cross-sectional view of an optical coupler in accordance with another embodiment of the present disclosure along the A-A line in FIG. 1B as seen at the chip facet with four waveguides in two guiding layers;
FIG. 10 illustrates a top view of the arrangement of optical waveguides within the optical coupler shown in FIG. 9;
FIGS. 11A and 11B illustrate two further embodiments of optical couplers in accordance with the present disclosure where the four waveguides have substantially identical dimensions;
FIGS. 12A and 12B illustrate top views of two possible arrangements of the waveguides in the optical couplers shown in FIGS. 11A and 11B;
FIGS. 13A - 13C illustrate simulation plots of the coupling efficiency (CE) of the optical coupler in FIG. 9, mode matched with a fibre having an MFD of 6.4 µm, as a function of various design parameters generated using Ansys Lumerical MODE@.
FIG. 14 illustrates simulation plots of the coupling efficiency (CE) of the optical coupler in FIG. 9 for the coupling efficiencies (CE) as a function of G1 for fibres with different MFDs and different D1 values generated using Ansys Lumerical MODE@.
FIG. 15 illustrates a cross-sectional view of an optical coupler in accordance with another embodiment of the present disclosure along the A-A line in FIG. 1B as seen at the chip facet with six waveguides arranged in three guiding layers;
FIGS. 16A and 16B illustrate alternative embodiments of the optical coupler in FIG. 15;
FIGS. 17A - 17C illustrate embodiments of the three-layer optical coupler in accordance with the present disclosure that includes two thick layers and one thin layer;
FIGS. 18A and 18B show further embodiments of the three-layer optical coupler in accordance with the present disclosure where all three guiding layers are of the same thickness; and
FIGS. 19A and 19B illustrate simulation plots of the coupling efficiency (CE) of the three-layer optical coupler in FIG. 15, mode matched with a fibre having an MFD of 10.4 µm, as a function of various design parameters generated using Ansys Lumerical MODE@.

Like reference numerals are used throughout the figures to denote identical elements and features. While aspects of the invention will be described in conjunction with the illustrated embodiments, it will be understood that it is not intended to limit the invention to such embodiments.

### DETAILED DESCRIPTION OF THE INVENTION

Silicon photonics in the implementation of photonic integrated circuits (PIC) has gained increasing traction as a viable technology, particularly in the area of quantum computing, due to its technological maturity, low fabrication cost, high integration density, and compatibility with existing fabrication methodologies. With the advent of the semiconductor fabrication process, the size of integrated circuit elements has been greatly reduced, resulting in higher integration density. However, the increasing size disparity between optical sources such as fibre cables and on-chip waveguides could result in significant optical coupling loss, thereby jeopardizing the signal integrity of the entire system. Thus, optical couplers configured to facilitate optical communication between an external light source (e.g., fibre optical cable or laser source) and an on-chip silicon waveguide at a high optical efficiency becomes a crucial design element in any integrated photonic system.

Methods and systems described herein provide an optical coupling device configured to couple an external light source, such as a laser source or a fibre optical cable, to an integrated waveguide in a PIC for both classical and quantum photonic applications. In one exemplary embodiment, the optical coupler described herein includes one waveguide on a first optical guiding layer and two waveguides on a second optical guiding layer. A vertical distance between the two optical guiding layers, coupled with a horizontal (or transverse) distance between the two waveguides within the second optical guiding layer, may be configured to mode match with the external light source to achieve a desired level of optical efficiency. Further, the two distance values may also be configured to accommodate fabrication tolerance error and/or fabrication limitations with respect to optical guiding layer thickness and waveguide width.

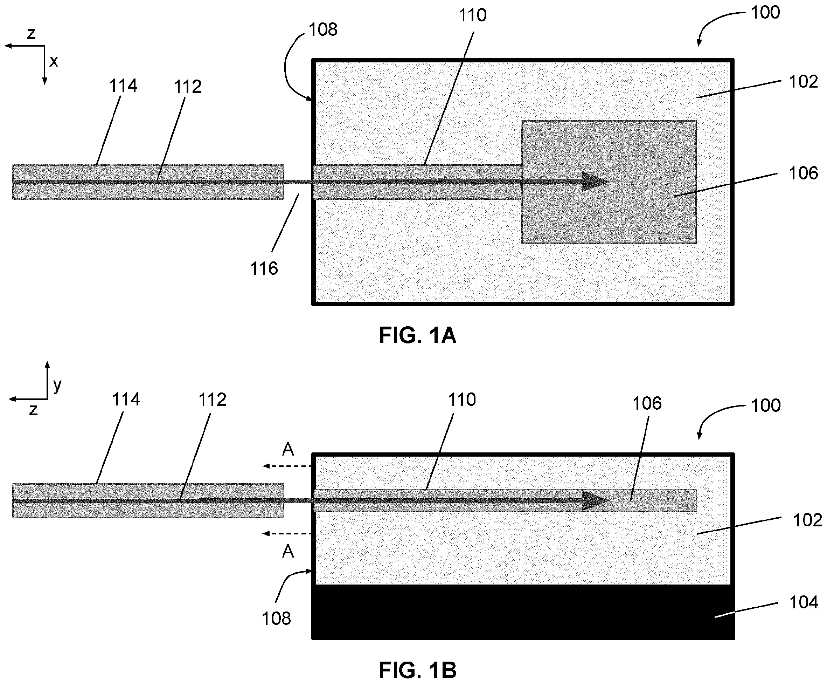

FIGS. 1A and 1B illustrate a top cross-sectional view and a side cross-sectional view of an exemplary silicon-based photonic device 100, respectively. The device 100 may be a semiconductor chip, a dielectric chip, or any other suitable semiconductor medium. The device 100 includes one or more cladding layers 102 supported above a substrate 104. The substrate 104 may be fabricated with any suitable material, including silicon, gallium arsenide (GaAs), indium phosphide (InP), and silicon dioxide for example. The thickness of the substrate 104 may be dependent upon fabrication technology and/or application. For example, the thickness of a substrate layer 104 in a typical semiconductor chip ranges from 100 µm to 1000 µm. For clarity and simplicity, the substrate 104 is omitted from subsequent figures.

It is understood that while only one cladding layer 102 is shown in FIGS. 1A and 1B for clarity and brevity, embodiments of the present disclosure include two or more cladding layers as described in more detail below. Each cladding layer 102 may be formed with a suitable cladding material, such as silicon dioxide and gallium aluminum arsenide (GaAlAs) for example. A PIC 106 is formed in at least one of the cladding layers 102. The PIC 106 includes one or more integrated optical elements such as modulators, switches, and detectors (not shown). The cladding layer 102 containing the PIC 106 is also referred to as the main guiding layer, while the other cladding layers 102 containing one or more optical waveguides are referred to as auxiliary guiding layers. All cladding layers may collectively be referred to as guiding layers.

An optical coupler 110 in accordance with one embodiment of the present disclosure extends from a chip facet 108 of the photonic device 100 to the PIC 106. The optical coupler 110 is configured to permit optical communication of an optical signal 112 from an external light source 114, such as an optical fibre or laser source, to a routing waveguide within the PIC 106. In FIGS. 1A and 1B, one end of the optical coupler 110 is aligned substantially flush with the chip facet 108. In other embodiments, the optical coupler 110 may be recessed at some distance (i.e., 1-5 µm) away from the chip facet 108.

An external light source 114, such as an optical fibre or laser source, is in optical communication with the optical coupler 110 at the chip facet 108. In embodiments as shown in FIGS. 1A and 1B, the external light source 114 is separated from the chip facet 108 by a free-space gap 116. By way of a non-limiting example, the free-space gap 116 may be approximately 100 nm. Typically, a free-space gap 116 may happen when a fibre delivering the optical signal 112 has an incorrectly cleaved end, angled chip facet, or due to physical arrangement of the light source for example.

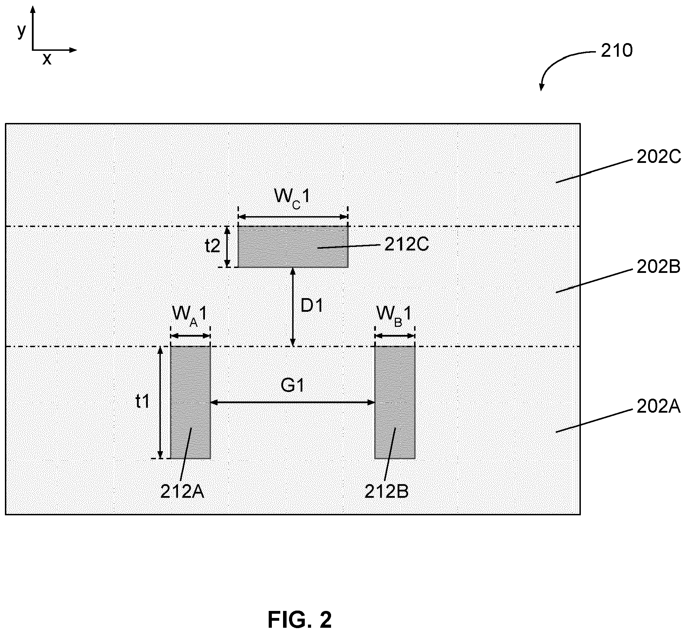

FIG. 2 illustrates a partial elevation view of chip facet 108 from the A-A line in FIG. 1B showing optical coupler 210 in accordance with an exemplary embodiment of the present disclosure. The optical coupler 210, which could implement the optical coupler 110 in FIGS. 1A and 1B, includes three optical waveguides 212A, 212B, and 212C (collectively referred to as optical waveguides 212) arranged in two cladding layers 202 (including a main guiding layer 202A and an auxiliary guiding layer 202B). In the illustrated embodiment, optical waveguides 212A and 212B are formed within the main guiding layer 202A, while waveguide 212C is formed within the auxiliary guiding layer 202B. Each of the waveguides 212 is etched into their respective cladding layers 202. A cover cladding layer 202C is formed on top of cladding layer 202B such that the waveguide 212C is encased in cladding material. The dotted lines within FIG. 2 show conceptual boundaries between the different layers.

As shown, each of the optical waveguides 212 is surrounded by cladding material. The cladding material may be of any suitable material that has a lower refractive index compared to the waveguides such that any optical signal 112 transmitted therewithin is optically confined within the waveguides by means of total internal reflection. By way of non-limiting examples, the cladding layers 202 may be of silicon dioxide or gallium aluminum arsenide (GaAlAs). The optical waveguides 212 may, for example, be fabricated from silicon nitride, silicon oxynitride, air, silicon, barium titanate, lithium niobate, indium gallium arsenide phosphide (InGaAsP), gallium arsenide (GaAs), or any suitable material to achieve total internal reflection with the selected cladding material. In one preferred embodiment, all the cladding layers 202 are fabricated from the same cladding material such that the optical waveguides 212 are surrounded by a homogenous cladding material with a uniform refractive index. In further embodiments, one or more of the cladding layers 202 may be fabricated with different cladding materials and present varying refractive indices surrounding one or more of the waveguides 212.

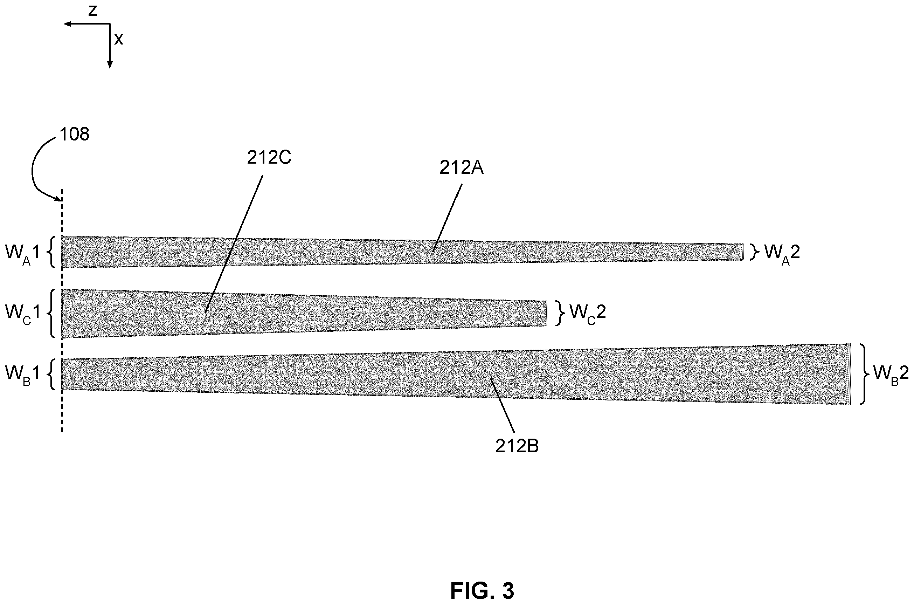

FIG. 3 illustrates a top view of the optical waveguides 212 shown in FIG. 2. FIG. 3 is intended to show the conceptual longitudinal profiles of the waveguides 212 and may not accurately depict the specific dimensions of the waveguides and/or physical relationships between the waveguides. For example, any potential spatial overlap as seen from above (e.g., along the y-axis) between waveguides in different cladding layers 202 are not depicted in FIG. 3. The dimensions of the figures may not be proportional and may be exaggerated for illustration purposes.

As can be observed from FIG. 3, each of the optical waveguides 212 has a tapered profile extending from a first width along the x-axis at the chip facet 108 to a second terminal width along the x-axis. For example, waveguide 212A extends from a first width WA1 along the x-axis to a second width WA2 along the x-axis over its length along the z-axis. Upon receipt of the input optical signal 112 at the chip facet 108, a coupled mode is formed between the waveguides 212 and traverses along the waveguides.

In accordance with one aspect of the present disclosure, the physical dimensions of the waveguides 212 and the spatial relationship between the waveguides may be configured to facilitate mode matching at the chip facet 108. Differences between dimensional parameters such as tip widths WA1, WB1, as well as their respective tip thickness (e.g., t1) at the chip facet 108 may cause mode asymmetry, and thereby negatively impact mode matching and potentially induce undesired optical loss. Thus, in a preferred embodiment, optical waveguides 212A and 212B are of the same material and therefore have the same refractive indices. Hence, the respective dimensions of the waveguides 212A and 212B at the chip facet 108, namely waveguide tip widths WA1, WB1, and waveguide tip thickness t1 are substantially identical. The difference in the refractive index between the waveguide and the surrounding cladding material may also impact the dimensions of the waveguides 212. For example, a high refractive index difference may require smaller waveguide width at the chip facet 108 and, vice versa, wider waveguides may be used for relatively low refractive index differences.

Waveguides 212 adopt a tapering profile where WA1 and WC1 are greater than WA2 and WC2, respectively, and WB1 is less than WB2. In the embodiment shown in FIG. 3, WC1 is greater than WA1 and WB1. For each waveguide, the starting width at the chip facet 108 and the terminal width may be dictated, at least in part, by the tapering angle. The tapered profile helps to facilitate the transformation of the coupled optical modes from one waveguide to another based on the tapering angle of the waveguides. Thus, in addition to defining the rate of change for the waveguide width, the tapering angle also, at least in part, defines the rate of mode transformation between the waveguides.

At least one of the waveguides 212 in the main guiding layer 202A is configured to extend from the chip facet 108 to the PIC 106 with a terminating width that is substantially similar to a routing waveguide width of the PIC 106. In FIG. 3, waveguide 212B is shown as the main routing waveguide with a width WB2 that substantially matches the width of a routing waveguide within the PIC 106. In some embodiments, WB2 is greater than each of WA1, WA2, WC1, WC2, and WB1. By way of a non-limiting example, in the case of main routing waveguide 212B having a medium refractive index and a thickness of 400 nm, the waveguide tips at the chip facet 108 may be 100 nm - 300 nm in width depending on the MFD of the fibre to be mode matched for and widen to a WB2 of 800-1200 nm. The terminating widths WA2 and WC2 may be less than 200 nm for decoupling end tapers.

In the embodiment shown in FIG. 3, each of the waveguides 212 has a constant tapering angle. In further embodiments, the tapering angle may be dependent upon factors such as material of the waveguide and the permissible length of the waveguide along the z-axis and may be in the form of discrete steps, polynomial order tapering, and other suitable types of tapering profile.

Referring back to FIG. 2, at the chip facet 108, the tip of each of the waveguides 212 has a cross-sectional dimension that is substantially quadrilateral having a height along the vertical y-axis that is also the thickness of the waveguide material as denoted by t1, t2, and a width along the transverse x-axis. By way of a non-limiting example, the waveguides in the main guiding layer 202A can be constructed using silicon having a layer thickness t1 of >300 nm, and the waveguide in the auxiliary guiding layer 202B can be constructed using silicon nitride having a layer thickness t2 of <300 nm.

In accordance with one aspect of the present disclosure, the cross-sectional profile of the optical waveguides at the chip facet 108 may be varied to account for differences in layer thicknesses between layers 202 to maintain substantially the same optical performance. In some embodiments, the tip dimensions of each optical waveguide 212 may be inversely varied with respect to each other to maintain substantially the same cross-sectional area. For example, a decreased waveguide thickness t2 of the waveguide in the auxiliary guiding layer 202B may be compensated by increasing the width WC1 of waveguide 212C by a corresponding amount to maintain substantially similar optical performance. Conversely, when the waveguide thickness t2 is increased, the width WC1 may be decreased to achieve substantially similar optical performance. Similarly, increased waveguide thickness t1 would lead to decreased waveguide width WA1 and WB1 for waveguides 212A and 212B, respectively, and vice versa.

As shown, the waveguides from the two cladding layers 202A and 202B are separated by a vertical distance D1. The waveguides within the same guiding layer 202, namely 212A and 212B in layer 202A, are separated by a transverse distance G1. In accordance with a further aspect of the present disclosure, the parameters D1 and G1 may advantageously be configured to optimize the mode-matching condition to a particular optical source, such as a fibre. By way of non-limiting examples, optical fibres with large MFDs (i.e., up to 10.4 µm) may require larger D1 and/or G1 (i.e., up to 3.5 µm to 5 µm). The G1 and D1 distances do not to need to be equal to each other (i.e., D1>G1, G1>D1, or G1=D1). Any configuration of D1 and G1 may be adopted as long as the mode coupling between waveguides 212 is preserved.

In some embodiments, D1 may be restricted by fabrication capabilities of foundries, typically in the range of 100 nm - 2500 nm. The increased thickness of the dielectric or cladding material between the waveguides in adjacent cladding layers as measured by the D1 parameter can significantly increase the stress within the device up to the point of structural collapse. Additionally, significantly increasing G1 (i.e., 1.5 µm and more) may elevate the optical loss in the structure during transformation of the coupled optical mode. In one aspect of the present disclosure, physical dimension limitations on either D1 or G1 that could compromise the optical performance can advantageously be compensated, at least to a degree, by adjusting the other parameters. For example, the inability to achieve a large enough D1 can be compensated by increasing G1. Correspondingly, should the separation parameter G1 between waveguides 212A and 212B be limited in any way that may result in elevated optical loss, the parameter D1 may be increased to compensate for the degradation in optical performance. Advantageously, the optical coupler in accordance with embodiments of the present disclosure is capable of controlling the optical coupling with multiple configurable parameters, such as G1 and D1. Hence, embodiments of the optical coupler described herein provide greater tolerance to variations in the waveguide dimensions, fabrication limitations in waveguide spacing, refractive index variations, and mode asymmetry.

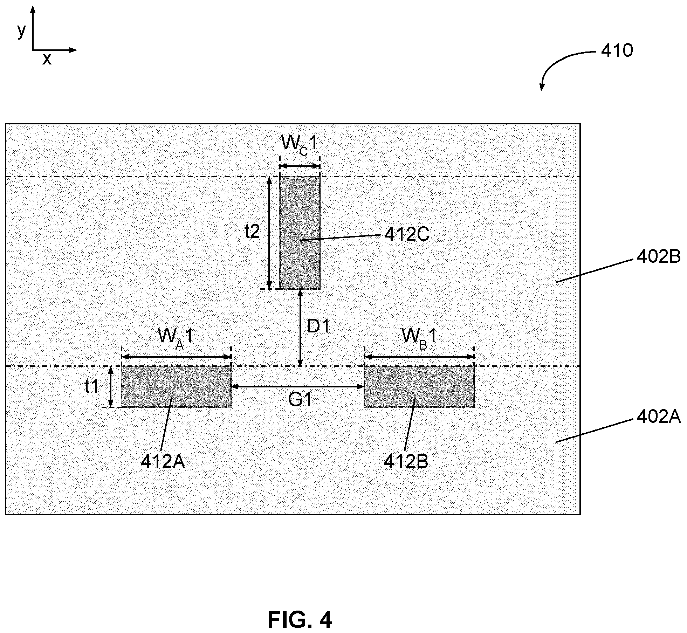

FIG. 4 illustrates a cross-sectional view of an optical coupler 410 in accordance with another embodiment of the optical coupler in FIG. 2. In contrast with optical coupler 210, the main routing waveguide 412C having layer thickness t2 is fabricated into the top cladding layer 402B, while auxiliary waveguides 412A and 412B having a thickness of t1, where t1<t2, is fabricated into the lower cladding layer 402A. In some embodiments, t1 is <=300 nm and t2 >= 300 nm. The main waveguide 412C, having a greater thickness, has a narrower tip width WC1. The tip widths WA1 and WB1 of the auxiliary waveguides 412A and 412B are increased corresponding to the decrease in thickness t1. In one preferred embodiment, waveguides within the same cladding layer, for example waveguides 412A and 412B, have substantially the same dimensions and both have widths greater than WC1. The embodiment shown in FIG. 4, with a potentially smaller separation distance G1 between waveguides 412A and 412B, may better facilitate optical coupling at a higher efficiency.

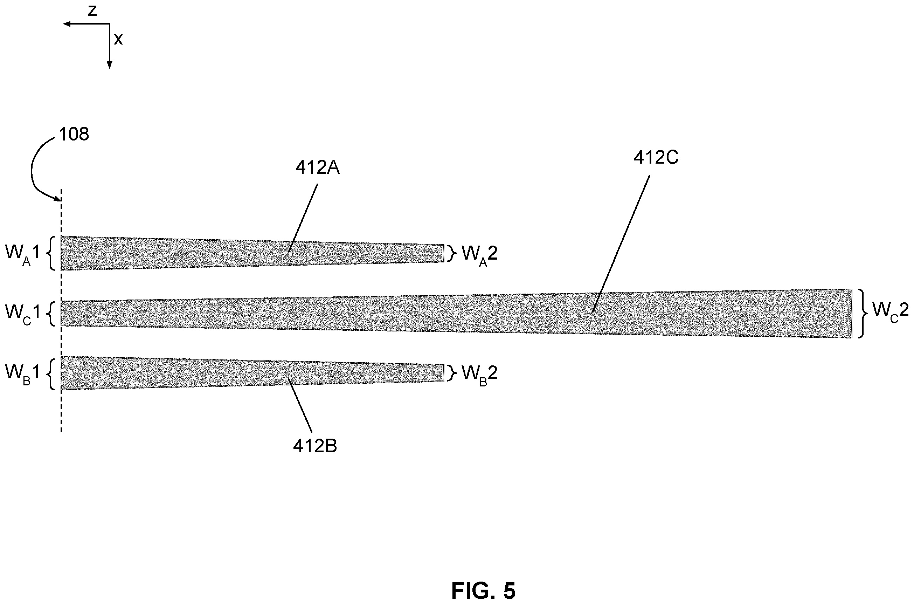

FIG. 5 illustrates a top view of the arrangement of optical waveguides 412 within the optical coupler 410 shown in FIG. 4. As shown, each of the waveguides 412A, 412B, and 412C has respective widths WA1, WB1, and WC1 at the chip facet 108. As waveguide 412C is the main routing waveguide that is responsible for routing the coupled optical mode onto the PIC 106, its width WC2 is dictated by the width of the routing waveguide of the PIC 106. In some embodiments, WC2 is greater than WC1, WA1, WA2, WB1, and WB2. All three waveguides 412 have tapering profiles where WA1 and WB1 are greater than or equal to WA2 and WB2, respectively, and WC2 is greater than or equal to WC1.

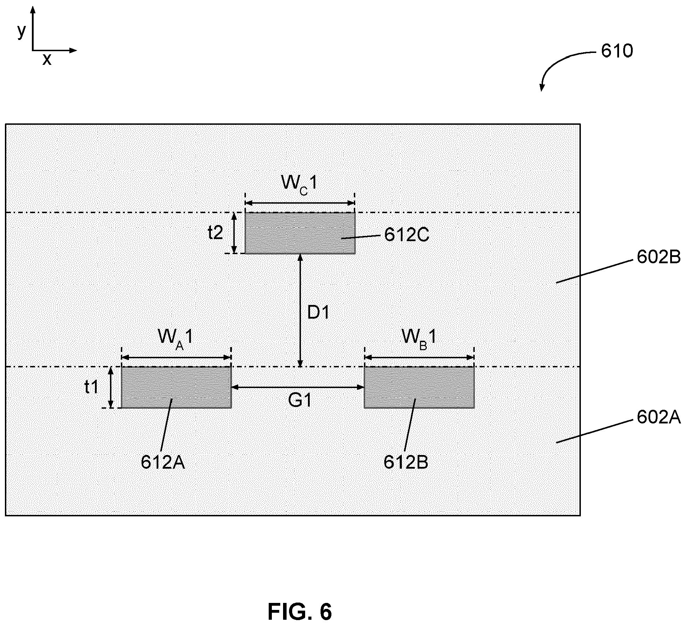

As mentioned, the substantially transversely oriented waveguides may provide better mode matching at the chip facet 108. Thus, in a further embodiment of optical coupler 610 shown in FIG. 6, all three waveguides 612 are oriented in this manner. In one preferred embodiment, all waveguides 612 participating in the cross-section mode building are fabricated from the same material having substantially the same refractive index, and hence have substantially the same waveguide dimensions with WA1, WB1, and WC1 being substantially the same (i.e., WA1≈WB1≈WC1) at the chip facet 108 and t1≈t2 < 300 nm. The transversely oriented waveguides 612 may permit larger G1 and D1 values that are more capable of mode matching with fibres having larger MFDs. However, the improved mode matching comes at the expense of coupling efficiency. This embodiment may be well-suited for optical devices that have an escalator waveguide formed for transforming optical modes onto the PIC 106. The escalator could be utilized to improve the coupling efficiency in conjunction with the improved mode-matching profile of the waveguides.

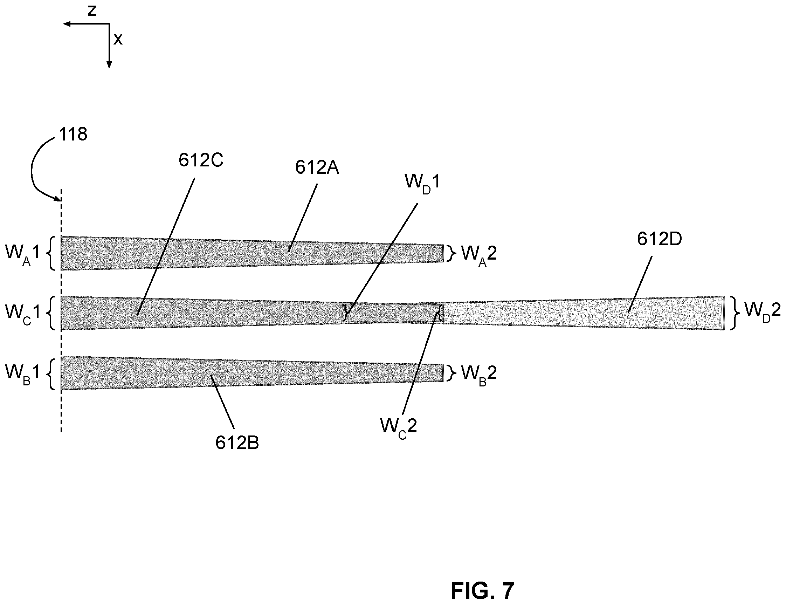

FIG. 7 illustrates a top view of one exemplary embodiment of optical waveguides 612 within the optical coupler 610 shown in FIG. 6. The three waveguides 612 are of substantially the same dimensions at the chip facet 108 (i.e., WA1≈WB1≈WC1 and t1≈t2). Each of the waveguides 612 maintains its tapering profile where WA1 > WA2, WB1 > WB2, and WC1 > WC2. FIG. 7 also shows the presence of an escalator waveguide 612D, which also has a tapering profile widening from a first end of width WD1 which is substantially similar to WC2, and a second end with width WD2 which is substantially similar to the routing waveguide width within PIC 106. The escalator waveguide 612D is typically formed in another cladding layer 602 and may spatially overlap with, for example, portions of waveguide 612C in order to facilitate the mode transformation from waveguide 612C onto the escalator waveguide 612D.

Alternatively, the waveguides can also all be vertically oriented (e.g., WA1≈WB1≈WC1, and t1≈t2 > 300 nm), which provides improved optical coupling. Such embodiments may be better suited in situations where high coupling efficiency is desired with less demanding mode-matching conditions. The escalator waveguide may not be needed and one of the thicker waveguides of the optical coupler can be configured to match the width of the PIC routing waveguide.

The design choices for G1, D1, tip width, and tip thickness may be configured to improve coupling efficiency, such as through simulation. Other embodiments, such as when the three waveguides (212, 412, 612) are vertically oriented (i.e., WA1 and WB1 < t1, WC1 < t2) may also be similarly adopted on a mutatis mutandis basis.

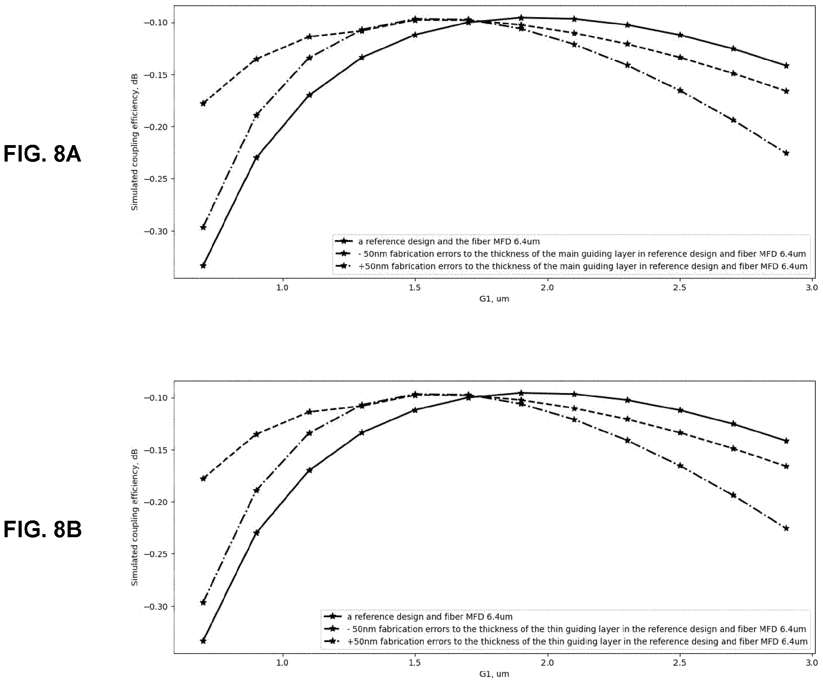

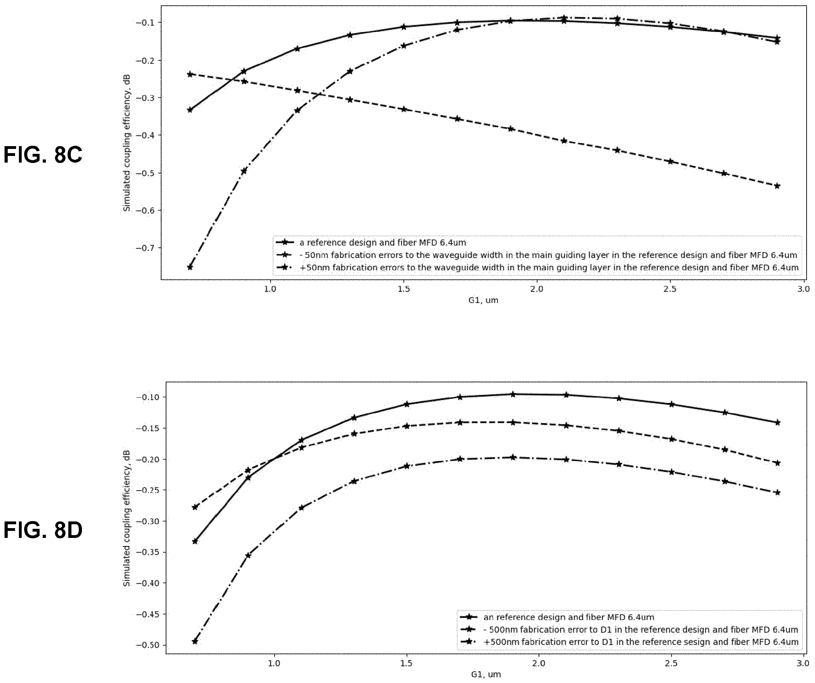

FIGS. 8A to 8D show the coupling efficiency (CE) of the optical coupler 210, mode matched with a fibre having an MFD of 6.4 µm, as a function of various design parameters generated using Ansys Lumerical MODE@. FIG. 8A shows simulation plots of the CE as a function of transverse distance G1 for various thicknesses in the main guiding waveguide. The optimized design (theoretical case with no dimensional variations) shows a maximum CE of - 0.1 dB (or 0.1 dB loss) at a transverse distance G1 of approximately 2 µm. The other plot lines show that the simulated coupler can tolerate fabrication errors of ±50 nm in the main routing waveguide thickness, while maintaining a CE of greater than -0.15 dB. FIG. 8B shows the simulated optical coupler exhibiting less than 0.05 dB of CE change when introduced with fabrication errors of ±50 nm in the thickness of the auxiliary waveguides at the optimal G1 value for the reference design. FIG. 8C shows the simulated optical coupler, at the optimal G1, showing less than 0.5 dB in CE variation in response to ±50 nm in main waveguide tip width variation. FIG. 8D shows the simulated optical coupler, at the optimal G1 for the reference design, exhibiting less than 0.2 dB (ranging from -0.1 to -0.3 dB) in CE change when introduced with ±500 nm variation in D1.

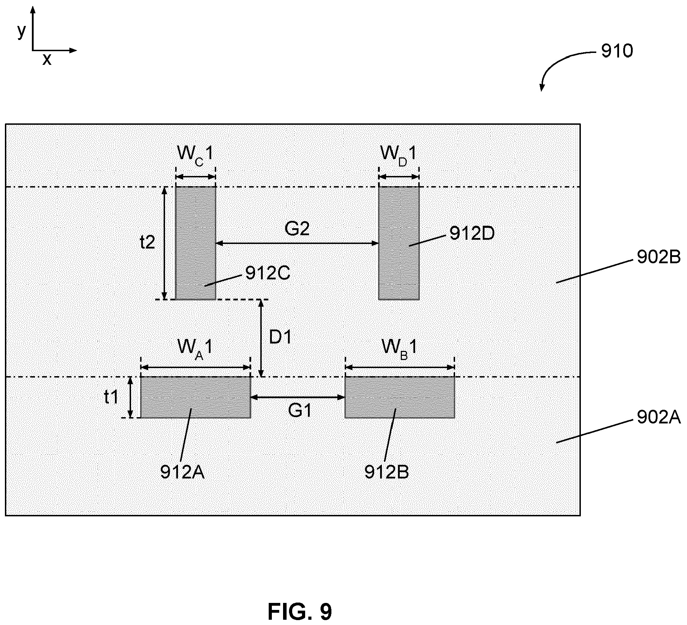

FIG. 9 illustrates another embodiment of the optical coupler 910 having four waveguides 912 arranged in two cladding layers 902A and 902B. As shown, waveguides 912A and 912B are formed in the cladding layer 902A, and waveguides 912C and 912D are formed within the cladding layer 902B. The waveguides 912C and 912D have thickness t2 ≥ 300 nm, and a tip width WC1 and WD1 < t2. Thus, one of the waveguides 912C and 912D is configured as the main waveguide having a terminal width substantially similar to that of the routing waveguide in the PIC 106. The waveguides 912A and 912B have thickness t1 ≤ 300 nm for improved mode matching.

The distance between the waveguides 912A, 912B and 912C, 912D, namely D1, may be defined by the mode-matching condition to be achieved. In some embodiments, D1 is between 100 nm and 2500 nm, which may allow the optical coupler 910 to achieve mode matching with fibres having an MFD of up to 10.4 µm with 0.1 dB optical loss. Waveguides 912A and 912B are separated by a distance G1, and waveguides 912C and 912D are separated by a distance G2.

The mode-matching condition to a particular fibre is defined by configurations of D1, G1, and G2. For example, fibres having larger MFDs may require larger D1, G1, and G2. Values of the three waveguide separation distances D1, G1, and G2 do not to need to be equal as D1>G1>G2 or G1>D1>G2 or G2>D1>G1 or G2=G1=D1 are all possible configurations as long as the coupled mode is preserved. In certain embodiments, D1 is restricted by the fabrication abilities of the foundries during fabrication of the optical device. In some embodiments, the value of D1 is in the range of 100 nm - 2500 nm. Since the presence of thicker dielectric cladding (i.e., increased D1) between waveguides of different cladding layers can increase the stress on the system, up to the structure collapsing, the inability to achieve large (i.e., ≥ 1 µm) D1 thicknesses can be at least partially compensated by increasing at least one of G1 and G2. Similarly, increasing G1 or G2 may induce loss in the structure during transformation of the coupled mode onto the main routing waveguide. Thus, any limitations to increasing G1 and/or G2 can be at least partially compensated by increasing D1. Advantageously, the mode-matching condition may be controlled with three separate fabrication parameters, namely D1, G1, and G2. The greater degree of mode-matching flexibility means that the optical coupler may provide greater tolerance to variations in waveguide dimensions, fabrication errors to D1, G1, or G2, and refractive index variations in the dielectric cladding or in the waveguiding material.

Similar to other embodiments described herein, the thicker and vertically oriented waveguides 912C, 912D are better suited to function as the main waveguide, whereas the thinner and more transversely oriented waveguides 912A, 912B are better suited as auxiliary waveguides configured for mode transformation and to provide better mode matching at the chip facet 108. In a preferred embodiment, waveguides within the same layer, such as waveguides 912A and 912B or 912C and 912D, have substantially the same dimensions to minimise mode profile distortion and optical loss resulting from aggravated mode mismatch. For example, embodiments of the present optical coupler may have up to 50 nm in height or width variation between waveguides of the same layer and still maintain optical losses of less than 0.2 dB.

Similar to other embodiments described herein, the cladding layers 902 may be fabricated from the same material having uniform refractive indices or different materials having contrasting refractive indices. For example, the cladding layer 902A can be fabricated with silicon and the cladding layer 902B can be fabricated with silicon nitride. Alternatively, both layers 902A and 902B can be fabricated with silicon nitride or any other suitable material.

In further embodiments, the relative positions of the cladding layers 902A and 902B may be switched such that the vertically oriented waveguides are located below the transversely oriented waveguides.

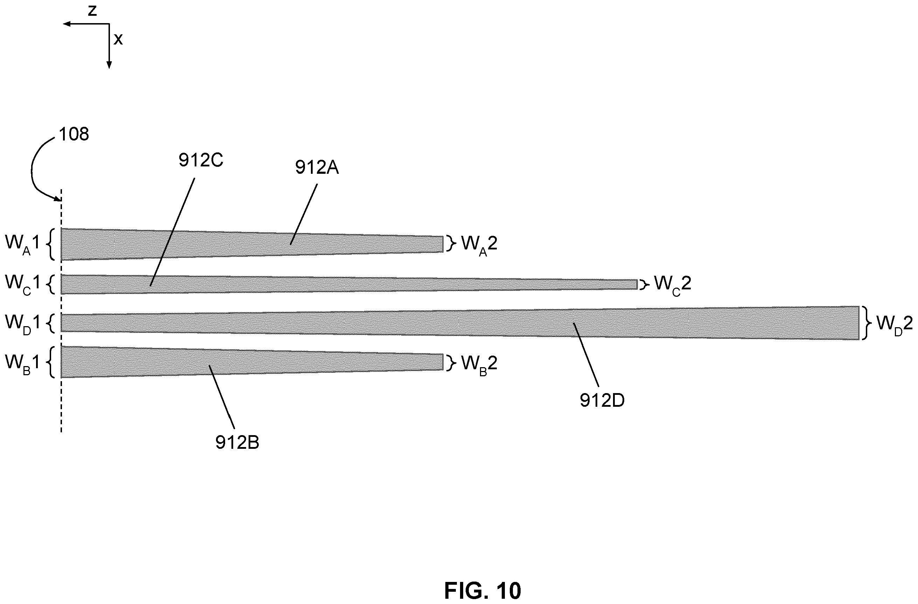

FIG. 10 illustrates a top view of one exemplary embodiment of optical waveguides 912 within the optical coupler 910 shown in FIG. 9. In some embodiments, waveguides within the same cladding layer have substantially the same tip dimensions (i.e., WA1≈WB1 with uniform t1 and WC1≈WD1 with uniform t2). Each of the waveguides 912 has a tapered profile where WA1 ≥ WA2, WB1 ≥ WB2, WC1 ≥ WC2, and WD2 > WD1. As shown, the waveguide 912D is the main routing waveguide that is in optical communication with the PIC 106, and hence WD2 has a dimension substantially equal to that of routing waveguides within the PIC. Any waveguide within the main guiding layer 902B, such as waveguide 912C, may be configured as the main routing waveguide. In the embodiment shown, WD2 > WA1, WA2, WB1, WB2, WC1, and WC2.

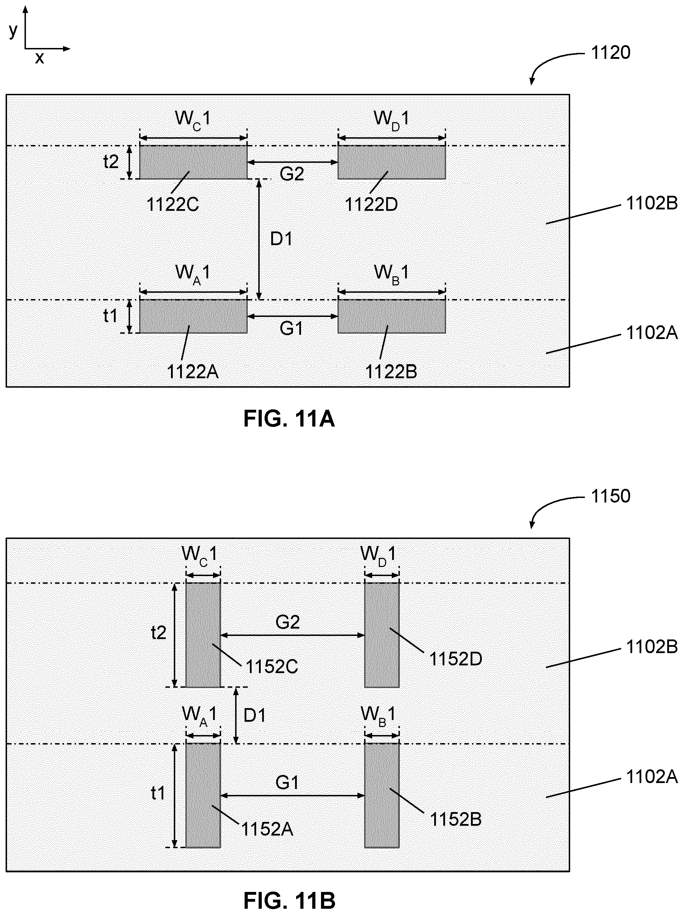

FIGS. 11A and 11B illustrate a partial elevation view of chip facet 108 from the A-A line in FIG. 1B showing two-layer optical couplers 1120 and 1150 having four substantially identically dimensioned waveguides in accordance with exemplary embodiments of the present disclosure. Each of the four waveguides has substantially identical tip dimensions at the chip facet 108, i.e., WA1≈WB1≈WC1≈WD1. FIG. 11A shows optical coupler 1120 having two thinner and transversely oriented waveguides 1122 having thicknesses t1 and t2 of 300 nm or less where WA1≈WB1≈WC1≈WD1 ≥ t1. FIG. 11B shows optical coupler 1150 having four thicker and more vertically oriented waveguides having thicknesses t1 and t2 of 300 nm or more where WA1≈WB1≈WC1≈WD1 ≤ t1.

The waveguides 1152 of optical coupler 1150 may require smaller critical waveguide dimensions, which in turn may also impose limitations on the maximum values of D1, G1, and G2. In contrast, optical coupler 1120 may allow the use of waveguides 1122 of greater dimension, which may provide greater configurability of D1, G1, and G2 and be able to achieve better mode matching with fibres having larger MFDs (i.e., up to 10.4 µm).

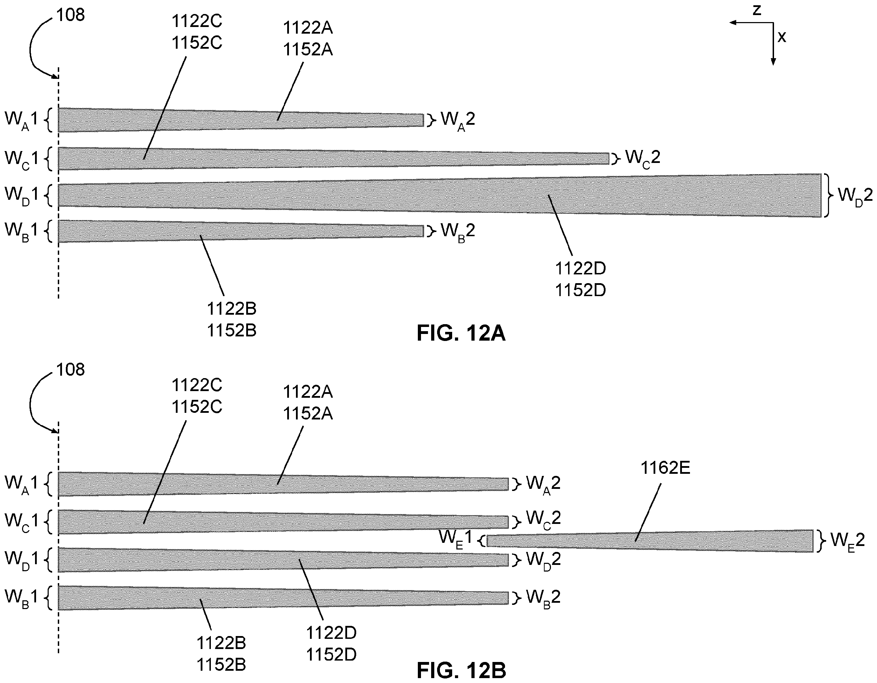

FIGS. 12A and 12B show top views of two possible longitudinal configurations in the z-direction of the waveguides that have substantially the same tip dimensions, such as waveguides 1122 and 1152 shown in FIGS. 11A and 11B, respectively. As shown in FIG. 12A, each of the waveguides 1122 or 1152 have substantially the same tip width (i.e., WA1≈WB1≈WC1≈WD1). All waveguides 1122, 1152 are shown to have a tapered profile along the z-axis of the optical coupler, but may have tip dimensions where WA1 ≥ WA2, WB1 ≥ WB2, WC1 ≥ WC2, and WD2 ≥ WD1. At least one of the waveguides 1122 or 1152 within the main guiding layer 1102B (for example, waveguide 1122D, 1152D in FIG. 12A) serves as the main routing waveguide having a terminating width substantially equal to that of routing waveguides within the PIC 106. Optical coupler 1150 may be used in conjunction with an escalator waveguide 1162E for improved coupling efficiency. There may be spatial overlap between waveguide 1162E with at least part of waveguide 1122C, 1152C and/or 1122D, 1152D to facilitate the mode transformation.

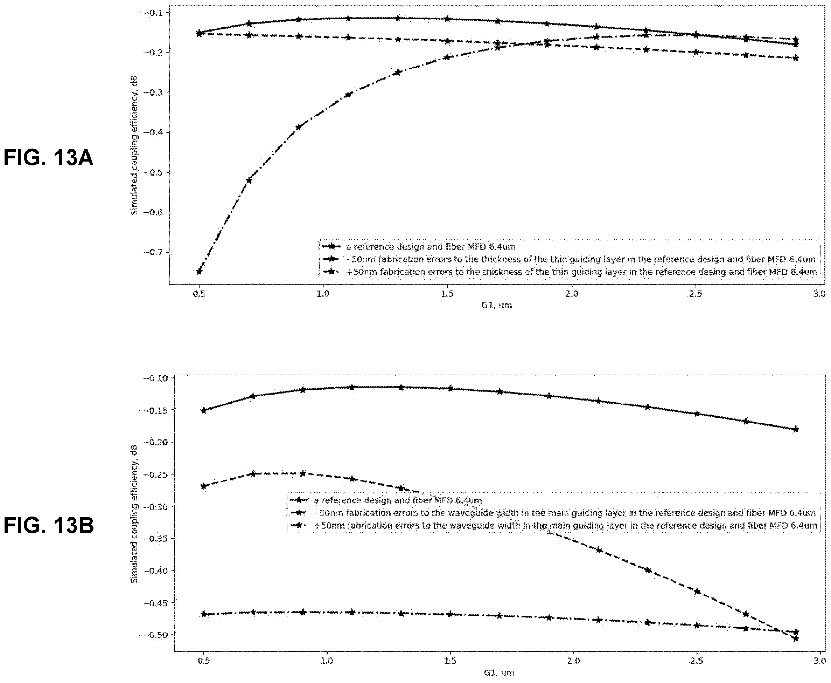

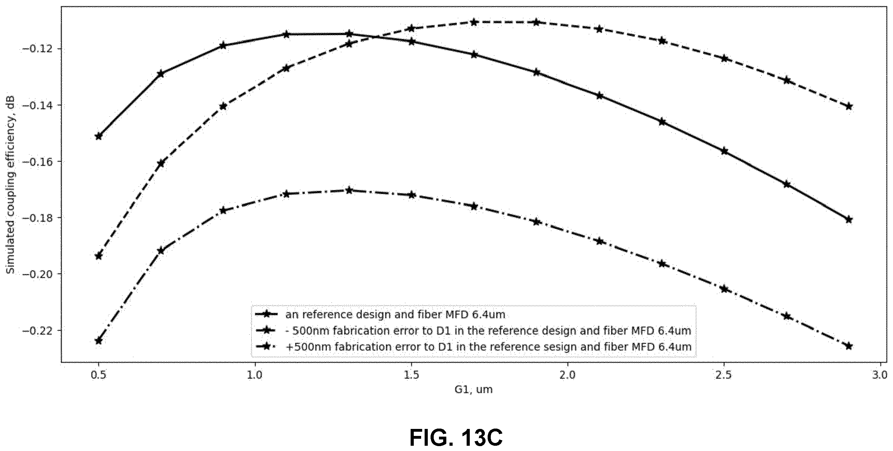

Embodiments of the two-layer-four-waveguide configuration of the optical coupler may provide greater tolerance to fabrication error. For example, up to 50 nm in difference in the waveguide widths and thicknesses may be acceptable without significant degradation in optical efficiency performance. Optical couplers 1120 and 1150 may be capable of achieving 0.1 dB loss of the coupling efficiency based on the mode overlaps with fibres, and possible mode matching with fibres having up to 10.4 µm MFD. The choice of D1, G1, and G2 may be dependent on the MFD for which mode matching is to be performed. FIGS. 13A to 13C show simulation plots of the coupling efficiency (CE) of the optical coupler 910, mode matched with a fibre having an MFD of 6.4 µm, as a function of various design parameters generated using Ansys Lumerical MODE@. FIG. 13A shows simulation plots of the CE as a function of transverse distance G1 for various thicknesses in the auxiliary guiding waveguides. The reference design (without any variations) exhibits an optimal CE of near -0.1 dB (or 0.1 dB loss) with G1 of approximately 1.1 µm. The other two plots show that the CE remains at -0.3 dB or greater with ±50 nm of fabrication error in the auxiliary waveguide thickness. FIG. 13B shows that the simulated optical coupler maintains -0.5 dB or better CE with ±50 nm variation in the main waveguide layer tip width. FIG. 13C shows the simulated optical coupler exhibiting approximately 0.1 dB in CE change with ±500 nm variation in the D1 parameter.

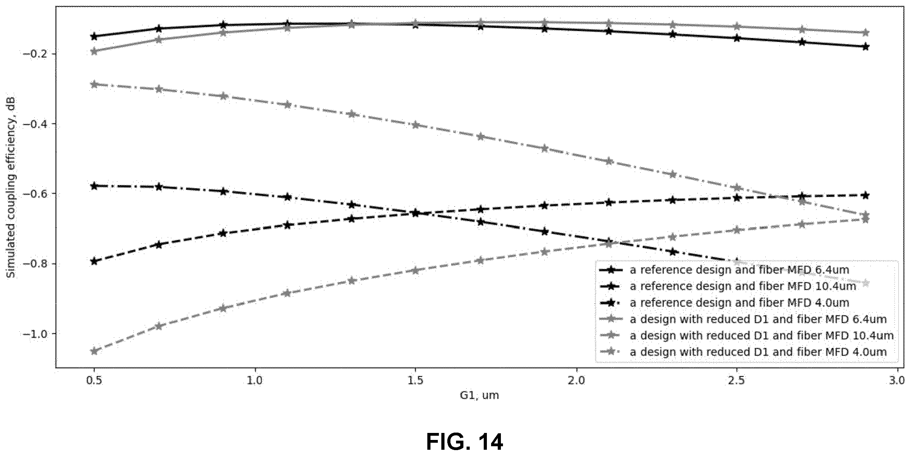

FIG. 14 shows simulation plots of the coupling efficiency (CE) of the optical coupler 910 as a function of G1 for fibres with different MFDs and different D1 values generated using Ansys Lumerical MODE@. As shown, the parameters G1 and D1 may be configured to improve optical coupling depending on different MFDs of the fibre. When mode matching with a fibre with an MFD of 6.4 µm, variations in D1 and G1 have little impact on the CE. When mode matching with a fibre having a smaller MFD of 4.0 µm, the smallest G1 (0.5 µm) and a reduced D1 (i.e., the waveguides are closer together transversely and vertically for improved mode matching with a smaller fibre) exhibits the best CE. In contrast, when mode matching with the larger 10.4 µm MFD fibre, the largest G1 (3.0 µm) and a larger D1 (i.e., the waveguides are further spaced apart to better mode match with a larger fibre) exhibits the best CE.

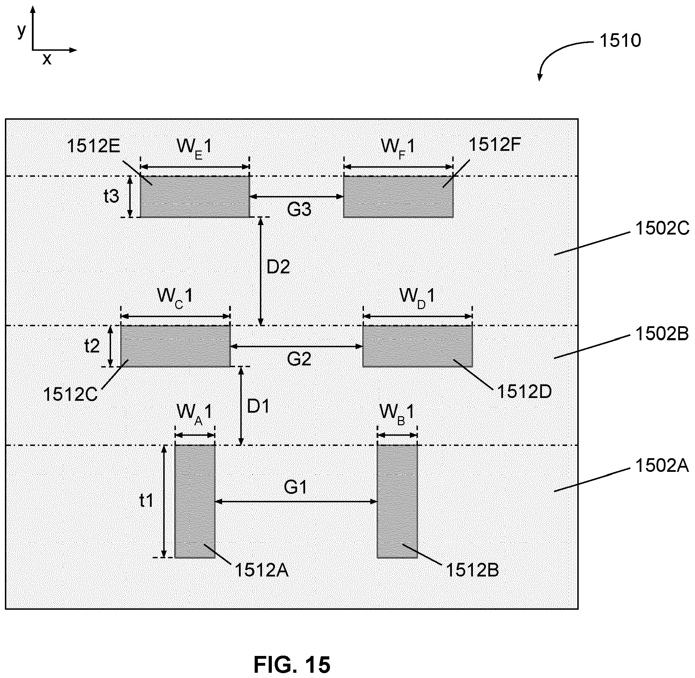

In further embodiments, the optical coupler in accordance with the present disclosure includes a fifth and a sixth optical waveguide arranged in a third cladding layer as shown in FIG. 15. The additional cladding layer and waveguides provide an increased cross-sectional area at the chip facet to enable more efficient mode matching, especially with fibres having large MFDs (e.g., 10.4 µm). For the optical coupler 1510, the mode-matching condition to a particular fibre is defined by five parameters, including the separation distance D1 between the waveguides in the cladding layer 1502A and the waveguides of the adjacent cladding layer 1502B, the separation distance D2 between the waveguides of cladding layers 1502B and 1502C, and the intra-layer waveguide separation distances G1, G2, and G3 within each of the cladding layers 1502A, 1502B, and 1502C, respectively.

The inter-layer separation distances D1 and D2 are defined by the desired mode-matching condition to be achieved and may be between 100 nm and 2500 nm. In some embodiments, D1 and D2 should be kept substantially the same for coupling mode symmetry. Larger values of D1 and D2 may facilitate better mode matching with fibres having larger MFDs, whereas smaller D1 and D2 dimensions may better facilitate mode transformation with reduced optical loss. In some embodiments where D1 < D2, it may be possible to mode match with fibres having larger MFDs (e.g., MDF of 10.4 µm).

The thicker waveguides (i.e., the vertically oriented waveguides) may have thicknesses of t1 ≥ 300 nm, and preferably substantially the same width as the routing waveguide width in the PIC 106 or available layer stack so that at least one may be configured as the main waveguide. The remaining waveguides in other cladding layers 1502B and 1502C may be configured as transversely oriented waveguides that have t2 and t3 of <300 nm for improved mode matching.

Waveguides within the same cladding layer preferably have substantially the same tip dimensions at the chip facet 108. Given the same material, differences in tip dimensions between waveguides of different guiding layers (i.e., WA1, WB1 with WC1, WD1, or with WE1, WF1) may create mode asymmetry and aggravated mode mismatching, leading to increased optical loss.

Waveguide tip widths and thicknesses of the waveguides in cladding layers 1502B and 1502C may be different. The tip thickness will directly impact the tip width dimensions as increased thicknesses require a smaller corresponding width. For example, in the case of t2>t3, the tip widths may be configured to satisfy the relationship (WC1≈WD₁)<(WE1≈WF₁), or when t2<t3, the tip width relationship becomes (WC1≈WD1)>(WE1≈WF1). However, in embodiments where t1 is considerably larger than t2 and t3 (e.g., t1 is twice as much as t2 or t3), it may be preferable to keep the waveguides in cladding layers 1502B and 1502C (i.e., 1512C, 1512D, 1512E, 1512F) of substantially the same tip dimensions.

In FIG. 15, three cladding layers 1502 do not need to be fabricated from the same material. For example, the auxiliary cladding layers 1502B and 1502C can be constructed with silicon and the main guiding layer 1502A can be constructed with silicon nitride.

Fibres with large MFDs (e.g., 10.4 µm) may require larger D1, D2, G1, G2, and G3. The values of the five parameters do not need to be equal and may be configured with any appropriate values as long as the coupled mode is preserved. Separation distances D1 and D2 are usually restricted by the fabrication abilities of the foundries, but are typically in the range of 100 nm - 2500 nm. In one embodiment, one of the most symmetric output modes can be achieved when D1 is substantially the same as D2.

The upper value range for D1 and D2 may be limited as increased dielectric cladding thickness between waveguides in adjacent cladding layers can significantly increase the stress in the system, potentially causing structural collapse. This limitation on D1 and D2 can be compensated by increasing one or more of G1, G2, and G3. Conversely, any physical limitations on G1, G2, and G3 (e.g., large values of G1, G2, or G3 may induce optical loss during transformation of coupled modes to the main routing waveguide) can be at least partially compensated by increasing one or both of D1 and D2. With the added third cladding layer, the coupled mode may be controlled with even more parameters compared to the two-layer embodiment, thereby allowing for even larger variations in the waveguide dimensions, greater error tolerance in the gaps G1, G2, G3, D1, and D2, and permit greater refractive index variations either in the surrounding dielectric or in the waveguiding material.

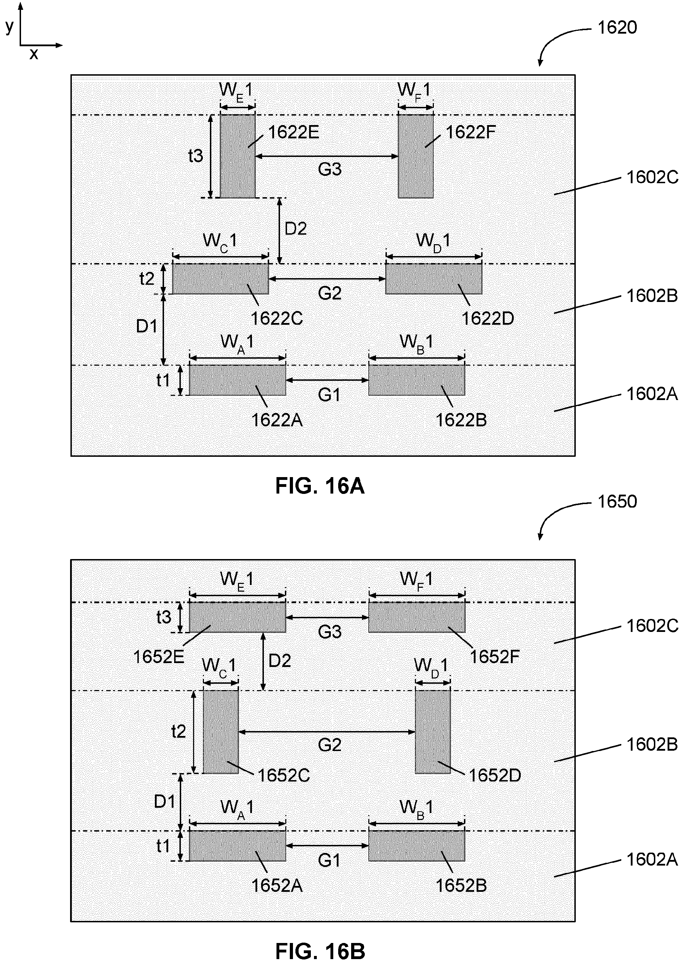

The cladding layer in which the main waveguide is fabricated may be any one of the three cladding layers 1502. FIGS. 16A and 16B illustrate two such optical couplers 1620 and 1650 where the cladding layer with the vertically oriented main waveguide (i.e., waveguide with thickness >300 nm) is the top and the middle cladding layer, respectively, as opposed to being the bottom cladding layer as shown in FIG. 15. In one preferred embodiment as best illustrated in FIG. 16A, the waveguides 1622 within the three cladding layers 1602 form a hexagonal shape in a cross-sectional arrangement at the chip facet 108. Waveguides 1622 satisfy the dimensional relationship of: G1+WA1≈G3+WE1<G2+WC1, where WA1≈WB1, WC1≈WD,1 WE1≈WF1, t1≈t2<t3 and D1≈D2. This arrangement may provide high coupling efficiency due to improved mode matching as the overall cross-sectional arrangement better matches that of a circular fibre mode and reduces sensitivity to fabrication errors. In some embodiments, it may be desirable to avoid significantly increasing the gap G3 (i.e., no more than D1 or D2 values) between the waveguides 1622E and 1622F within the main guiding layer 1602C as it can lead to increased loss during in-chip mode transformation.

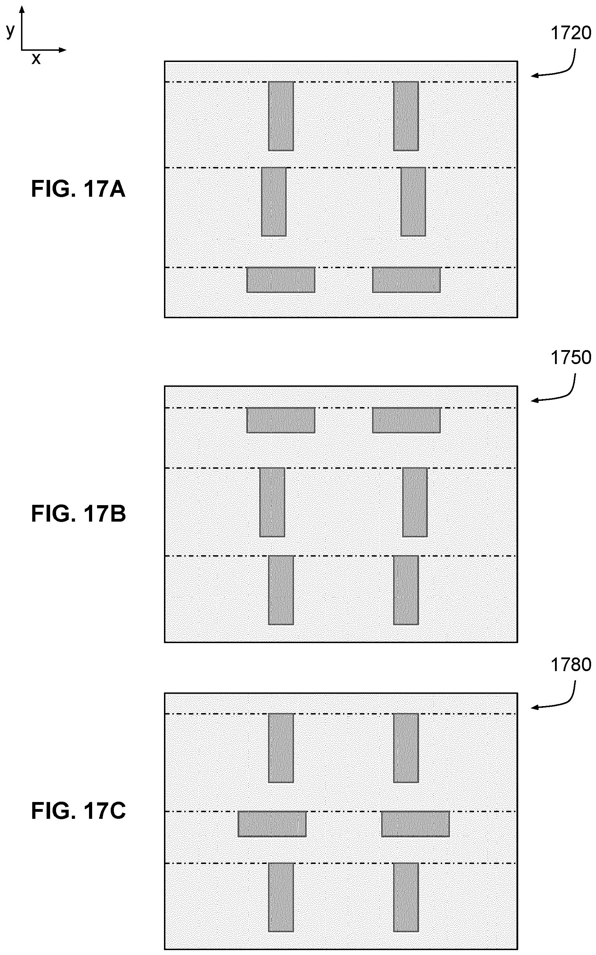

FIGS. 17A - 17C illustrate a partial elevation view of chip facet 108 from the A-A line in FIG. 1B showing three-layer optical couplers 1720, 1750, 1780 in accordance with exemplary embodiments of the present disclosure that include two thick waveguide layers (i.e., thickness > 300 nm) and one thin waveguide layer (i.e., thickness < 300 nm). The operational properties of 1720, 1750, 1780 are substantially similar to those of embodiments 1620, 1650 on a mutatis mutandis basis.

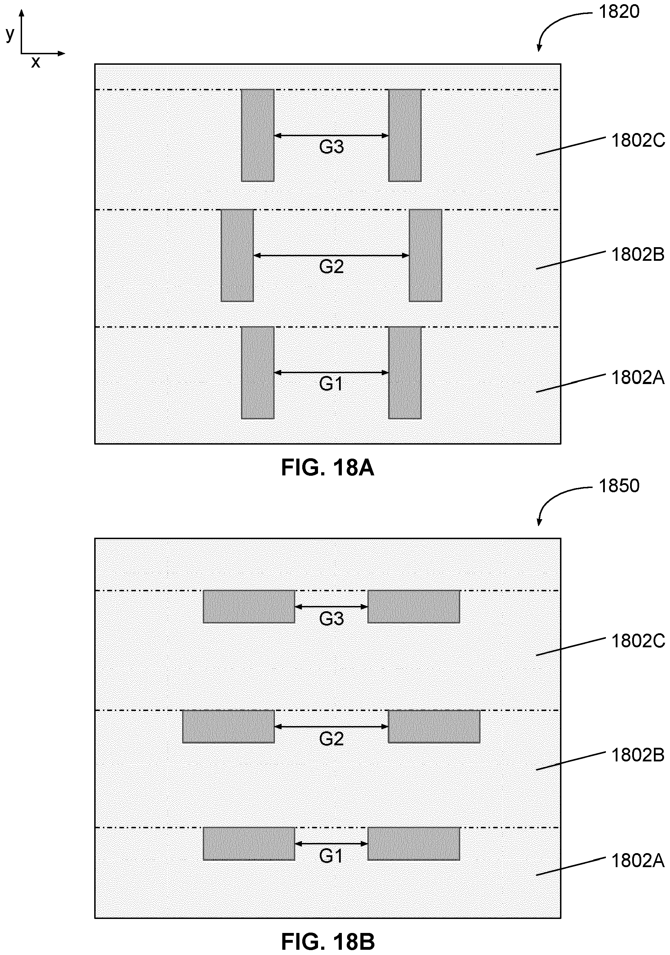

FIGS. 18A and 18B show partial elevation views of chip facet 108 from the A-A line in FIG. 1B showing three-layer optical couplers 1820, 1850 in accordance with the present disclosure where all three waveguides are of substantially the same tip dimensions. In optical coupler 1820, the main guiding waveguide that is in optical communication with the PIC 106 may be any one of the waveguides. Specifically, to achieve substantially identical waveguide tip dimensions, the waveguides in all three cladding layers 1802 are fabricated from the same material with substantially similar refractive indices. For embodiments where the waveguides in the cladding layers 1802 have different refractive indices even though the thicknesses of the layers are identical (i.e., the waveguides are made of different materials), the tip widths of the waveguides can be adjusted. For the layers with waveguides of higher refractive indices, the tip widths of the waveguides may be decreased; and for the layers with waveguides of lower refractive indices, the tip widths of the waveguides can be increased to maintain optical coupling. In one preferred embodiment, all waveguide tip dimensions are substantially similar with G1≈G2≈G3. The longitudinal profiles of the waveguides along the z-axis of the optical coupler may be substantially similar to those shown in FIGS. 12A and 12B. Optical coupler 1850 can be readily introduced on top of any integrated optical device by using an interlayer transition, such as with an escalator waveguide, from an existing layer.

The same design principles of the two- and three-layer embodiments can be extended to other designs with four or more cladding layers.

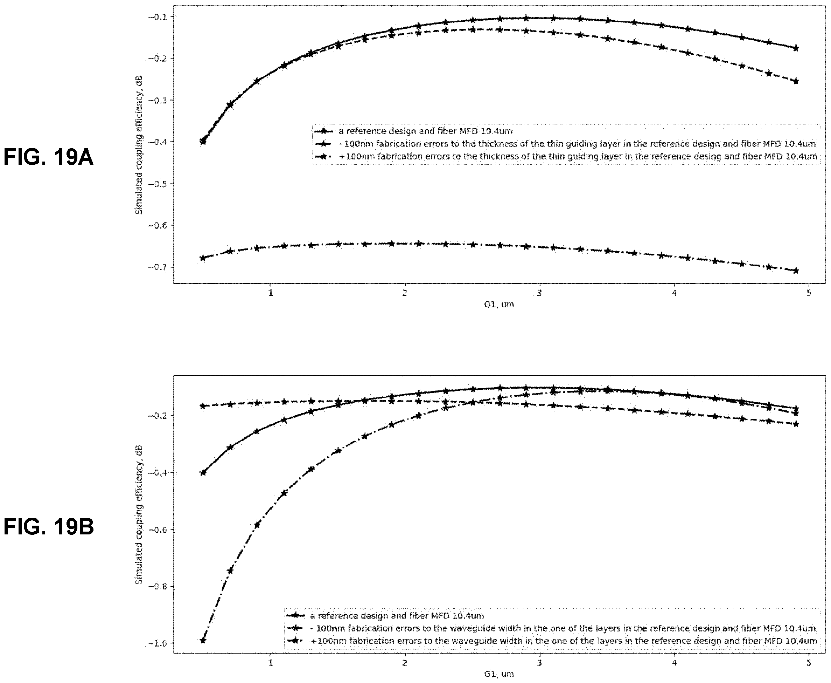

Simulations have shown that the three-layer optical coupler in accordance with the present disclosure may have tolerances of up to 100 nm in fabrication error in the widths and thicknesses of the cladding layers without compromising optical coupling efficiency. FIGS. 19A and 19B show simulation plots of the coupling efficiency (CE) of the three-layer optical coupler 1510, mode matched with a fibre having an MFD of 10.4 µm, as a function of various design parameters generated using Ansys Lumerical MODE@. FIG. 19A shows less than 0.6 dB change in CE at the G1 that provides the optimal CE in the reference design when a fabrication error of ±100 nm in auxiliary waveguide thickness is introduced. FIG. 19B shows the simulated optical coupler exhibiting tolerances for fabrication error of ±100 nm in the waveguide tip width for waveguides in one of the cladding layers. As shown, at the optimal G1 of approximately 3 µm, the simulated optical coupler exhibits approximately 0.1 dB change in CE.

Although the present disclosure may describe methods and processes with steps in a certain order, one or more steps of the methods and processes may be omitted or altered as appropriate. One or more steps may take place in an order other than that in which they are described, as appropriate.

Although the present disclosure may be described, at least in part, in terms of methods, a person of ordinary skill in the art will understand that the present disclosure is also directed to the various components for performing at least some of the aspects and features of the described methods, be it by way of hardware components, software, or any combination of the two. Accordingly, the technical solution of the present disclosure may be embodied in the form of a software product. A suitable software product may be stored in a pre-recorded storage device or other identical non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, although the systems, devices, and processes disclosed and shown herein may comprise a specific number of elements/components, the systems, devices, and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

## Claims

1. An optical coupler comprising:
a semiconductor substrate;
a first cladding layer supported over the substrate;
a second cladding layer supported over the substrate, the substrate, the first cladding layer, and the second cladding layer defining a facet;
a first optical waveguide arranged in the first cladding layer, the first optical waveguide having a first cross-sectional area at the facet defined by a first thickness in a vertical direction and a first width in a transverse direction orthogonal to the vertical direction;
a second optical waveguide arranged in the first cladding layer, the second optical waveguide at a first transverse distance from the first optical waveguide, the second optical waveguide having a second cross-sectional area defined by a second thickness and a second width at the facet; and
a third optical waveguide arranged in the second cladding layer, the third optical waveguide at a first vertical distance from the first and second optical waveguides, the third optical waveguide having a third cross-sectional area defined by a third thickness and a third width at the facet; and
wherein the first transverse distance and the first vertical distance are configured to perform one or more of mode matching with an external light source, maintaining optical coupling between the first, second, and third optical waveguides, and ensuring optical efficiency of the optical coupler.

2. The optical coupler of claim 1, wherein the first thickness and the second thickness are substantially identical, the first width and the second width are substantially identical, the third thickness is greater than the third width, and the first thickness is less than the first width.

3. The optical coupler of claim 1, wherein the first thickness and the second thickness are substantially identical, the first width and the second width are substantially identical, the third thickness is less than the third width, and the first thickness is greater than the first width.

4. The optical coupler of claim 1, wherein the first cross-sectional area and the second cross-sectional area are configured to optimize mode matching at the facet.

5. The optical coupler of claim 4, wherein the first cross-sectional area is defined by a first thickness of less than 300 nm, and the first width is greater than the first thickness.

6. The optical coupler of claim 1, wherein the third cross-sectional area is configured to optimize coupling efficiency.

7. The optical coupler of claim 6, where the third thickness is greater than 300 nm, and the third width is less than the third thickness.

8. The optical coupler of claim 7, wherein the third optical waveguide has a terminal width that is substantially identical to a width of a routing waveguide of a photonic integrated circuit (PIC), and the PIC is fabricated onto the second cladding layer such that the third optical waveguide is in optical communication with the routing waveguide of the PIC.

9. The optical coupler of claim 1, wherein a difference between the first width and the second width, and between the first thickness and the second thickness is up to 50 nm.

10. The optical coupler of claim 1, wherein the second cladding layer is supported above the first cladding layer.

11. The optical coupler of claim 1, wherein the first cladding layer is supported above the second cladding layer.

12. The optical coupler of claim 1, wherein the first thickness is substantially identical to the second thickness and the third thickness; and the first width is substantially identical to the second width and the third width.

13. The optical coupler of claim 1, further comprising a fourth optical waveguide arranged in the second cladding layer at a second transverse distance from the third optical waveguide, the fourth optical waveguide having a fourth cross-sectional area defined by a fourth thickness and a fourth width at the facet;
wherein the first transverse distance, the second transverse distance, and the first vertical distance are configured to perform one or more of mode matching with an external light source, maintaining optical coupling between optical energy transmitted within the first, second, third, and fourth optical waveguides, and ensuring optical efficiency of the optical coupler.

14. The optical coupler of claim 13, wherein the fourth thickness is substantially identical to the third thickness, and the fourth width is substantially identical to the third width.

15. The optical coupler of claim 13, further comprising
a third cladding layer supported over the substrate, the substrate, the first cladding layer, the second cladding layer, and the third cladding layer defining the facet;
a fifth optical waveguide arranged in the third cladding layer, the fifth optical waveguide having a fifth cross-sectional area at the facet defined by a fifth thickness in a vertical direction and a fifth width in a transverse direction orthogonal to the vertical direction; and
a sixth optical waveguide arranged in the third cladding layer, the sixth optical waveguide at a third transverse distance from the fifth optical waveguide, the sixth optical waveguide having a sixth cross-sectional area defined by a sixth thickness and a sixth width at the facet, the fifth and sixth optical waveguides being at a second vertical distance from the waveguides of an adjacent cladding layer;
wherein the first transverse distance, the second transverse distance, the third transverse distance, the first vertical distance, and the second vertical distance are configured to perform one or more of mode matching with an external light source, maintaining optical coupling between optical energy transmitted within the first, second, third, fourth, fifth, and sixth optical waveguides, and ensuring optical efficiency of the optical coupler.

16. The optical coupler of claim 15, wherein the second cladding layer is supported above the first cladding layer and the third cladding layer is supported above the second cladding layer.

17. The optical coupler of claim 16, wherein the six waveguides in the three cladding layers are arranged such that they form a hexagonal shape at the facet where a first sum of the first transverse distance and the first width is substantially identical to a second sum of the third transverse distance and the fifth width, the first sum and the second sum being each less than a third sum of the second transverse distance and the second width.

18. The optical coupler of claim 15, wherein
the first and second optical waveguides are configured to optimize optical coupling where the first and second thickness are greater than 300 nm, and the first and second widths are less than the first and second thicknesses; and
the third, fourth, fifth, and sixth optical waveguides are configured to optimize mode matching where the third, fourth, fifth, and sixth thicknesses are each less than the third, fourth, fifth, and sixth widths, respectively.
